# EUROPEAN PATENT SPECIFICATION

(11) **EP 3 441 595 B1**
(45) Date of publication and mention of the grant of the patent: **14.04.2021**
(21) Application number: 17185626.3
(22) Date of filing: 09.08.2017
(51) Int. Cl.: F02D 19/08, F02D 41/40

(54) **METHOD TO ADJUST A CONTROL PARAMETER OF A FUEL COMBUSTION ENGINE**
VERFAHREN ZUM JUSTIEREN EINES STEUERUNGSPARAMETERS EINES KRAFTSTOFFVERBRENNUNGSMOTORS
PROCÉDÉ POUR AJUSTER UN PARAMÈTRE DE COMMANDE D'UN MOTEUR À COMBUSTION DE CARBURANT

(43) Date of publication of application: 13.02.2019
(73) Proprietor: Vitesco Technologies GmbH, 30165 Hannover (DE)
(72) Inventor: Zhang, Hong, 93105 Tegernheim (DE)

(56) References cited:
- EP-A1- 3 006 701
- DE-A1-102014 224 719
- US-A1- 2004 069 273
- US-A1- 2008 162 016
- US-A1- 2009 165 760
- US-A1- 2011 166 767
- MARTIN HÄRTL EMAIL ET AL: "Oxymethylenether als potenziell CO2-neutraler Kraftstoff für saubere Dieselmotoren Teil 1: Motorenuntersuchungen", MTZ - MOTORTECHNISCHE ZEITSCHRIFT, SPRINGER, vol. 78, no. 2, 1 February 2017 (2017-02-01), pages 52-59, XP001597450, ISSN: 0024-8525, DOI: 10.1007/S35146-016-0170-9 [retrieved on 2017-01-19]

## Description

The invention relates to a method to adjust at least one control parameter controlling a fuel combustion engine.

In a fuel combustion engine, parameters for example of a combustion of the fuel in a combustion chamber can be controlled via an electronic control unit. These parameters are controlled and therefore adjusted in view of a plurality of requirements. For example, the emission of molecules such as CO2 or NOx due to the combustion of the fuel should possibly be reduced as far as possible. Additionally, it is desirable to carry out the combustion such that the highest possible degree of efficiency can be attained.

The control parameters to control the combustion of known fuels such as Diesel or Gasoline in order to attain the best emission results and the less fuel consumption are well-known.

With the introduction of alternative fuels such as synthetic fuels the problem arises that the control parameters controlling a fuel combustion engine which is run at least partially with a synthetic fuel need to be optimal adjusted also for best emission and best fuel consumption.

Until now synthetic fuels were not used in standard fuel combustion engines normally used for Diesel or Gasoline.

By "synthetic fuels" such fuels should be understood which are generated via a controlled chemical reaction. In particular synthetic fuels are fuels which are generated using free CO2 and electrical energy from renewable energy sources.

Possible known synthetic fuels are for example Oxymethylenether (OME, DME), Methanol, Dimethylcarbonat (DMC) or Dimethlycarbonat/Methlyformiat (DMC+).

In difference to the synthetic fuels fossil fuels are based on crude oil which are extracted from the crude oil by refinement. Fossil fuels are therefore all Diesel fuels and Gasoline fuels, but also all other known standard fuels based on crude oil.

The document US 2011/166767 discloses a method for determining a fuel compensation factor (FCF) to account
for the amount of oxygenated fuel blended in diesel fuel.

The document "Oxymethylenether als potenziell CO2-neutraler Kraftstoff für saubere Diesel" by Martin Härtl et al discloses the use of OME as a potentially CO2-neutral fuel.

The document US 2008/0162016 A1 discloses a method for optimizing operation of an engine driven by an electronic or digital system incorporating at least one parameter or one law or one mapping for engine injection, combustion or post-treatment.

The document EP 3 006 701 A1 discloses a method and device for operating a vehicle, in particular a commercial vehicle.

The document US 2004/0069273 A1 discloses a System using a fuel quality sensor for controlling various aspects of engine operation.

The document DE 102014224719 A1 discloses an acoustic monitoring device for fuel quality.

The document US 2009/O165760 A1 discloses a method of operating a turbo charged diesel engine, and/or a vehicle which is powered by such an engine, comprising introducing into the engine a diesel fuel composition containing a viscosity increasing component.

Object of the instant invention is to provide a method with which at least one control parameter of a fuel combustion engine can be adjusted to the use of a synthetic fuel.

This object is attained with a method according to claim 1.

Advantageous embodiments of the invention are subject-matter of the dependent claims.

A method to adjust at least one control parameter controlling a fuel combustion engine comprises the following steps:
- providing at least one control parameter to control the fuel combustion engine, the control parameter being optimized to control the combustion of a pure fossil fuel;
- providing a combustible fuel being composed of a fossil fuel and a synthetic fuel;
- measuring the proportion of the synthetic fuel in the combustible fuel;
- adjusting the at least one control parameter based on the measured proportion of the synthetic fuel in the combustible fuel; and
- reducing an air fuel ratio λ representing the at least one control parameter to less than 1,4 with a higher proportion of synthetic fuel in a combustible fuel, whereby during an acceleration phase with a high torque demand, the λ-value is shifted from λ = 1,4, with Diesel fuel, further to 1, the more synthetic fuel is present in the combustible fuel.

According to the above-described method first the proportion of the synthetic fuel in the fuel to be combusted in the combustion engine is measured. Based on this measurement it is clear how far a control parameter defined for the combustion of a pure fossil fuel has to be amended or adjusted, respectively, to attain the best emission and fuel consumption results during the combustion of the combustible fuel being a blend of a fossil fuel and a synthetic fuel.

Hence, the idea is the adjustment of at least one important control parameter for a known fuel combustion engine, for example a Diesel engine, depending on the proportion of the synthetic fuel in the combustible fuel.

In one embodiment an operation strategy is provided relating a grade of necessary adjustment of the control parameter to the proportion of the synthetic fuel in the combustible fuel.

The operation strategy is generated beforehand the control of the control parameter by measuring the necessary parameter dependent on the proportion of synthetic fuel which is present in the combustible fuel.

In one embodiment the measuring of the proportion of the synthetic fuel in the combustible fuel is carried out optically or acoustically and in particular in a fuel supply line supplying fuel to the fuel combustion engine. Therefore, the synthetic fuel proportion is measured using an optical method or using for example an ultrasonic sensor as fuel quality sensor.

In one embodiment a fuel mass to be injected into a combustion chamber and representing the at least one control parameter is adjusted depending on a desired torque. The desired torque of a combustion engine results in a defined fuel mass which has to be combusted to attain the desired torque. The necessary fuel mass is depending on the heat value of the fuel to be combusted in the combustion engine. If the synthetic fuel has a lower fuel value as the fossil fuel, then the fuel mass as a whole has to increased compared to the combustion of the pure fossil fuel. Therefore, the fuel mass in particular is increased with a higher proportion of synthetic fuel in the combustible fuel.

For example, Oxymethylenether, in particular OME, has a heat value which is less than half of the heat value of Diesel. Therefore, in case the proportion of the synthetic fuel in a combustible fuel is almost 100%, then the fuel mass has to be more than double of the fuel mass in case of the combustion of Diesel.

In one embodiment a fuel injection duration to inject the combustible fuel into the combustion chamber and representing the at least one control parameter is adjusted depending on the desired fuel injection mass. In particular, a density of the combustible fuel is measured and the fuel injection duration is adjusted depending on the measured density and the desired fuel injection mass.

If the synthetic fuel has a density which is higher than that of the pure fossil fuel, then the injection duration can be reduced compared to the same fuel mass request, as in the same time interval a larger fuel mass can be injected with a combustible fuel having a higher density. In case of OME as synthetic fuel, if the synthetic fuel is present in a proportion of 100%, the injection duration can be reduced by about 12% comparing to the same fuel mass request of pure Diesel, since the density of Diesel fuel is 23% less than that of OME. Hence, in particular the fuel injection duration is decreased with a higher proportion of synthetic fuel in the combustible fuel.

In one embodiment a fuel injection pressure representing the at least one control parameter is adjusted, the fuel injection pressure in particular being decreased with a higher proportion of synthetic fuel in a combustible fuel. Most synthetic fuels generate no particulate emission during combustion, different to fossil fuels. Therefore, depending on a proportion of synthetic fuels, the injection pressure can be reduced as a high injection pressure usually is used to reduce the generation of combustion particles. If the injection pressure can be reduced, then also the power for pressure generation and therefore the overall fuel consumption can be reduced.

In one embodiment a number of post injection cycles representing the at least one control parameter is decreased with a higher proportion of synthetic fuel in the combustible fuel.

Also the use of post injection cycles is due to the reduction of particulate emission due to the combustion of fossil fuel. In case a synthetic fuel is used having no particulate emission during combustion, the number of post injection cycles can be reduced the more synthetic fuel is present in the combustible fuel. If the synthetic fuel, for example OME, is present in a proportion of 100%, the post injection can completely be eliminated.

An air fuel ratio λ representing at least one control parameter is reduced to less than 1,4 with higher proportion of synthetic fuel in a combustible fuel.

Therefore, the more synthetic fuel is present in the combustible fuel, the more the combustion is shifted to a rich mixture. Usually, for example with Diesel fuel, a lean mixture is used, for example during an acceleration phase with a high torque demand at λ = 1,4. The more synthetic fuel is present in the combustible fuel, the further the λ-value can be shifted to 1, which makes it possible to inject more fuel mass during acceleration. In case of OME as synthetic fuel and in case OME is present in a proportion of 100%, λ can be reduced to 1.

In one embodiment a rate of regeneration cycles of a particle filter representing the at least one control parameter is decreased with a higher proportion of synthetic fuel in a combustible fuel. The higher the proportion of synthetic fuel in the combustible fuel, the less particulate mass raw emission is expected as most synthetic fuels do not produce any particles during combustion. For example with 100% OME in the combustible fuel, the value of particulate mass raw emission can be supposed to be 0. The emission of particulate mass directly influences the loading of a particle filter, and therefore the less loading is to be expected in the particle filter, less regeneration cycles need to be done. In case of 100% OME as synthetic fuel in a combustible fuel, no regeneration of a particulate filter is necessary as no particulate mass is emitted during combustion.

In one embodiment an EGR rate representing the at least one control parameter is increased with a higher proportion of synthetic fuel in the combustible fuel. EGR means "exhaust gas recirculation" and is a NOx-reduction technique. The higher the OME proportion in the combustible fuel, then the more EGR rate can be used, especially during catalyst warming up phase.

In a preferred embodiment, the combustible fuel is provided as a composition of Diesel as fossil fuel and Oxymethylenether (OME, DME) as synthetic fuel.

It is also possible to provide the combustible fuel as a blend of Diesel and other synthetic fuels such as Methanol, DMC or DMC+. Instead of Diesel, also Gasoline can be used as the fossil fuel in the blend.

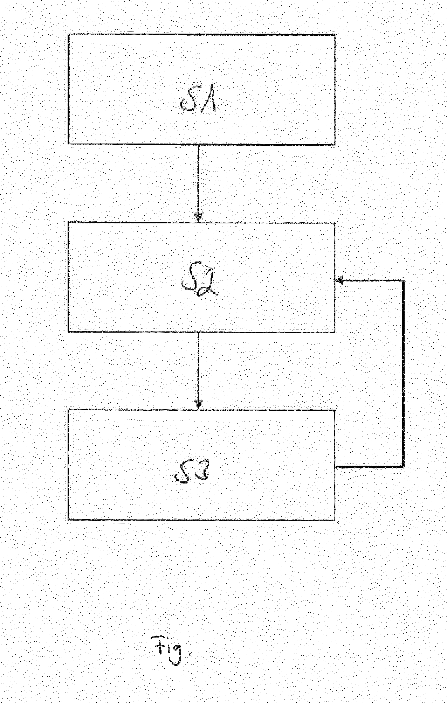

One embodiment of the invention is shown in the accompanying drawing in which a flow chart schematically shows the steps of a method to adjust a control parameter in a fuel combustion engine.

In this flow chart in step S1, at least one control parameter is defined to control the fuel combustion engine, wherein the control parameter is optimized to control the combustion of a pure fossil fuel.

In step S2 a combustible fuel is measured in order to determine if and in which proportion a synesthetic fuel is present in the combustible fuel besides a fossil fuel.

Based on this measured proportion the control parameter which is optimized to the combustion of the pure fossil fuel is adjusted in step S3 to the proportion of the synthetic fuel present in the measured combustible fuel.

With such an adjustment an improved combustion of the combustible fuel comprising a certain proportion of synthetic fuel can be attained.

As the proportion of the synthetic fuel in the combustible fuel can change for example after refueling the combustion engine steps S2 and S3 are permanently repeated.

## Claims

1. Method to adjust at least one control parameter controlling a fuel combustion engine, comprising the steps:
- providing at least one control parameter to control the fuel combustion engine, the control parameter being optimized to control the combustion of a pure fossil fuel;
- providing a combustible fuel being composed of a fossil fuel and a synthetic fuel;
- measuring the proportion of the synthetic fuel in the combustible fuel; and
- adjusting the at least one control parameter based on the measured proportion of the synthetic fuel in the combustible fuel,
**characterized in that**
an air fuel ratio λ representing the at least one control parameter is reduced to less than 1,4 with a higher proportion of synthetic fuel in a combustible fuel, whereby during an acceleration phase with a high torque demand, the λ-value is shifted from λ = 1,4, with Diesel fuel, further to 1, the more synthetic fuel is present in the combustible fuel.

2. Method according to claim 1,
**characterized in that** the measuring of the proportion of the synthetic fuel in the combustible fuel is carried out in a fuel supply line supplying fuel to the fuel combustion engine.

3. Method according to any of the claims 1 or 2,
**characterized in that** the measuring of the proportion of the synthetic fuel in the combustible fuel is carried out acoustically.

4. Method according to any of the claims 1 to 3, **characterized in that** the synthetic fuel proportion is measured using an ultrasonic sensor as fuel quality sensor.

5. Method according to any of the claims 1 to 4,
**characterized in that** a fuel mass to be injected into a combustion chamber and representing at least one control parameter is adjusted depending on a desired torque, wherein the fuel mass is increased with a higher proportion of synthetic fuel in the combustible fuel.

6. Method according to claim 5,
**characterized in that** a fuel injection duration to inject the combustible fuel into the combustion chamber and representing at least one control parameter is adjusted depending on the desired fuel injection mass, whereas in particular a density of the combustible fuel is measured and the fuel injection duration is adjusted depending on the measured density and the desired fuel injection mass, wherein the fuel injection duration is decreased with a higher proportion of synthetic fuel in the combustible fuel.

7. Method according to any of the claims 1 to 6,
**characterized in that** a fuel injection pressure representing at least one control parameter is adjusted, wherein the fuel injection pressure is decreased with a higher proportion of synthetic fuel in the combustible fuel and/or **characterized in that** the number of post injection cycles representing at least one control parameter is decreased with a higher proportion of synthetic fuel in the combustible fuel.

8. Method according to any of the claims 1 to 7,
**characterized in that** a rate of regenerating cycles of a particle filter representing at least one control parameter is decreased with a higher proportion of synthetic fuel in the combustible fuel and/or **characterized in that** an EGR rate representing at least one control parameter is increased with a higher proportion of synthetic fuel in the combustible fuel.

9. Method according to any of the claims 1 to 8, **characterized in that** the combustible fuel is provided as a composition of Diesel as fossil fuel and Oxymethylenether as synthetic fuel.

## Patentansprüche

1. Verfahren zum Justieren zumindest eines Steuerungsparameters, der einen Kraftstoffverbrennungsmotor steuert, das die folgenden Schritte aufweist:
- Bereitstellen zumindest eines Steuerungsparameters zum Steuern des Kraftstoffverbrennungsmotors, wobei der Steuerungsparameter optimiert ist für die Steuerung der Verbrennung eines reinen fossilen Kraftstoffs;
- Bereitstellen eines brennbaren Kraftstoffs, der zusammengesetzt ist aus einem
fossilen Kraftstoff und einem synthetischen Kraftstoff;
- Messen des Anteils des synthetischen Kraftstoffs im brennbaren Kraftstoff; und
- Justieren des zumindest einen Steuerungsparameters basierend auf dem gemessenen Anteil des synthetischen Kraftstoffs im brennbaren Kraftstoff,
**dadurch gekennzeichnet, dass**
ein Luft-Kraftstoff-Verhältnis λ, das den zumindest einen Steuerungsparameter repräsentiert, auf weniger als 1,4 mit einem höheren Anteil von synthetischem Kraftstoff im brennbaren Kraftstoff reduziert wird, wobei, während einer Beschleunigungsphase mit einer hohen Drehmomentanforderung, der A-Wert von λ = 1,4, mit Dieselkraftstoff, weiter zu 1 verschoben wird, je mehr synthetischer Kraftstoff im brennbaren Kraftstoff vorhanden ist.

2. Verfahren nach Anspruch 1,
**dadurch gekennzeichnet, dass** das Messen des Anteils des synthetischen Kraftstoffs im brennbaren Kraftstoff in einer Kraftstoffversorgungsleitung ausgeführt wird, die Kraftstoff zum Kraftstoffverbrennungsmotor zuführt.

3. Verfahren nach einem der Ansprüche 1 oder 2,
**dadurch gekennzeichnet, dass** das Messen des Anteils des synthetischen Kraftstoffs im brennbaren Kraftstoff in einer Kraftstoffversorgungsleitung akustisch ausgeführt wird.

4. Verfahren nach einem der Ansprüche 1 bis 3,
**dadurch gekennzeichnet, dass** der Anteil von synthetischem Kraftstoff unter Verwendung eines Ultraschallsensors als Kraftstoffqualitätssensor gemessen wird.

5. Verfahren nach einem der Ansprüche 1 bis 4,
**dadurch gekennzeichnet, dass** eine Kraftstoffmasse, die in die Brennkammer einzuspritzen ist und die zumindest einen Steuerungsparameter repräsentiert, in Abhängigkeit von einem gewünschten Drehmoment justiert wird, wobei die Kraftstoffmasse umso mehr vergrößert wird, je höher der Anteil von synthetischem Kraftstoff im brennbaren Kraftstoff ist.

6. Verfahren nach Anspruch 5,
**dadurch gekennzeichnet, dass** eine Kraftstoffeinspritzdauer zum Einspritzen des brennbaren Kraftstoffs, die zumindest einen Steuerungsparameter repräsentiert, in Abhängigkeit von der gewünschten Kraftstoffeinspritzmasse justiert wird, wobei insbesondere eine Dichte des brennbaren Kraftstoffs gemessen wird und die Kraftstoffeinspritzdauer in Abhängigkeit von der gemessenen Dichte und der gewünschten Kraftstoffeinspritzmasse justiert wird, wobei die Kraftstoffeinspritzdauer umso mehr verringert wird, je höher der Anteil von synthetischem Kraftstoff im brennbaren Kraftstoff ist.

7. Verfahren nach einem der Ansprüche 1 bis 6,
**dadurch gekennzeichnet, dass** ein Kraftstoffeinspritzdruck, der zumindest einen Steuerungsparameter repräsentiert, justiert wird, wobei der Kraftstoffeinspritzdruck geringer ist, je höher der Anteil von synthetischem Kraftstoff im brennbaren Kraftstoff ist, und/oder **dadurch gekennzeichnet, dass** die Anzahl von Nacheinspritzzyklen, die zumindest einen Steuerungsparameter repräsentiert, umso mehr verringert wird, je höher der Anteil von synthetischem Kraftstoff im brennbaren Kraftstoff ist.

8. Verfahren nach einem der Ansprüche 1 bis 7,
**dadurch gekennzeichnet, dass** eine Rate von Regenerierungszyklen eines Partikelfilters, die zumindest einen Steuerungsparameter repräsentiert, umso mehr verringert wird, je höher der Anteil von synthetischem Kraftstoff im brennbaren Kraftstoff ist, und/oder **dadurch gekennzeichnet, dass** eine AGR-Rate, die zumindest einen Steuerungsparameter repräsentiert, umso mehr vergrößert wird, je höher der Anteil von synthetischem Kraftstoff im brennbaren Kraftstoff ist.

9. Verfahren nach einem der Ansprüche 1 bis 8,
**dadurch gekennzeichnet, dass** der brennbare Kraftstoff als eine Zusammensetzung aus einem Dieselkraftstoff als fossilem Kraftstoff und Oxymethylenether als synthetischem Kraftstoff bereitgestellt wird.

## Revendications

1. Procédé pour ajuster au moins un paramètre de commande commandant un moteur à combustion de carburant, comprenant les étapes :
- la fourniture d'au moins un paramètre de commande pour commander le moteur à combustion de carburant, le paramètre de commande étant optimisé pour commander la combustion d'un carburant fossile pur ;
- la fourniture d'un carburant combustible composé d'un carburant fossile et d'un carburant synthétique ;
- la mesure de la proportion du carburant synthétique dans le carburant combustible ; et
- l'ajustement de l'au moins un paramètre de commande sur la base de la proportion mesurée du carburant synthétique dans le carburant combustible,
**caractérisé en ce que**
un rapport air-carburant λ représentant l'au moins un paramètre de commande est réduit jusqu'à moins de 1,4 avec une proportion plus élevée de carburant synthétique dans un carburant combustible, moyennant quoi, durant une phase d'accélération avec une demande de couple élevée, la valeur λ est décalée de λ = 1,4, avec du carburant diesel, davantage vers 1, plus le carburant synthétique est présent dans le carburant combustible.

2. Procédé selon la revendication 1,
**caractérisé en ce que** la mesure de la proportion du carburant synthétique dans le carburant combustible est réalisée dans une conduite d'alimentation en carburant fournissant du carburant au moteur à combustion de carburant.

3. Procédé selon l'une quelconque des revendications 1 ou 2,
**caractérisé en ce que** la mesure de la proportion du carburant synthétique dans le carburant combustible est réalisée acoustiquement.

4. Procédé selon l'une quelconque des revendications 1 à 3,
**caractérisé en ce que** la proportion de carburant synthétique est mesurée en utilisant un capteur ultrasonique en tant que capteur de qualité de carburant.

5. Procédé selon l'une quelconque des revendications 1 à 4,
**caractérisé en ce qu'**une masse de carburant destinée à être injectée dans une chambre de combustion et représentant au moins un paramètre de commande est ajustée en fonction d'un couple souhaité, dans lequel la masse de carburant est augmentée avec une proportion plus élevée de carburant synthétique dans le carburant combustible.

6. Procédé selon la revendication 5,
**caractérisé en ce qu'**une durée d'injection de carburant pour injecter le carburant combustible dans la chambre de combustion et représentant au moins un paramètre de commande est ajustée en fonction de l'injection souhaitée de masse de carburant, alors que, en particulier, une densité du carburant combustible est mesurée et la durée d'injection de carburant est ajustée en fonction de la densité mesurée et de l'injection souhaitée de masse de carburant, dans lequel la durée d'injection de carburant est réduite avec une proportion plus élevée de carburant synthétique dans le carburant combustible.

7. Procédé selon l'une quelconque des revendications 1 à 6,
**caractérisé en ce qu'**une injection de carburant pression représentant au moins un paramètre de commande est ajustée, dans lequel la pression d'injection de carburant est réduite avec une proportion plus élevée de carburant synthétique dans le carburant combustible et/ou **caractérisé en ce que** le nombre de cycles post-injection représentant au moins un paramètre de commande est réduit avec une proportion plus élevée de carburant synthétique dans le carburant combustible.

8. Procédé selon l'une quelconque des revendications 1 à 7,
**caractérisé en ce qu'**un taux de cycles de régénération d'un filtre à particules représentant au moins un paramètre de commande est réduit avec une proportion plus élevée de carburant synthétique dans le carburant combustible et/ou **caractérisé en ce qu'**un taux d'EGR représentant au moins un paramètre de commande est augmenté avec une proportion plus élevée de carburant synthétique dans le carburant combustible.

9. Procédé selon l'une quelconque des revendications 1 à 8,
**caractérisé en ce que** le carburant combustible est fourni sous forme de composition de diesel en tant que carburant fossile et d'éther d'oxyméthylène en tant que carburant synthétique.
